(19) **Europäisches Patentamt**

**European Patent Office**

**Office européen des brevets**

(11) **EP 0 541 056 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int. Cl.⁶: **A01N 25/14**, A01N 47/30
// (A01N47/30, 25:14, 37:40)

(21) Anmeldenummer: **92118876.9**

(22) Anmeldetag: **04.11.1992**

(54) **Wasserdispergierbare Granulate aus Suspoemulsionen**

Wettable granules from suspoemulsions

Granulés dispersibles dans l'eau de suspoémulsions

(84) Benannte Vertragsstaaten:
**AT BE CH DE DK ES FR GB IT LI NL SE**

(30) Priorität: **08.11.1991 DE 4136781**

(43) Veröffentlichungstag der Anmeldung:
**12.05.1993 Patentblatt 1993/19**

(73) Patentinhaber: **Hoechst Schering AgrEvo GmbH D-13342 Berlin (DE)**

(72) Erfinder:
- **Röchling, Hans, Dr.**
  **W-6232 Bad Soden/Ts. (DE)**
- **Schumacher, Hans, Dr.**
  **W-6093 Flörsheim am Main (DE)**
- **Baumgärtner, Joachim**
  **W-6230 Frankfurt am Main 80 (DE)**

(56) Entgegenhaltungen:
EP-A- 261 492          EP-A- 0 224 845
EP-A- 0 388 867

**Beschreibung**

Die vorliegende Erfindung betrifft neue wasserdispergierbare Granulate von Wirkstoff-Mischungen zur Anwendung im Pflanzenschutz.

In einer Reihe von Patentanmeldungen werden wasserdispergierbare Granulate (Abkürzung: WG) als umweltfreundliche Formulierungsart beschrieben, die sich durch hohe Sicherheit für den Anwender sowie beim Transport und der Lagerung auszeichnet. Der Formulierungstyp des wasserdispergierbaren Granulats wird bevorzugt bei festen, relativ hochschmelzenden Wirkstoffen (Fp. > 65 °C) angewandt. Man geht hierbei meist von wäßrigen Dispersionen aus, die sprühgetrocknet oder im Wirbelbett granuliert werden. Beispiele hierfür sind in EP-A-413 267, EP-A-388 867 und EP-A-224 845 beschrieben.

WG-Formulierungen können auch von flüssigen Wirkstoffen hergestellt werden, indem man diese an einem geeigneten Träger adsorbiert (EP-A-443 411).

Schwierigkeiten treten auf, wenn eine Kombinationsformulierung aus einem festen, in Form einer wäßrigen Dispersion formulierbaren Wirkstoff (Fp. > 65 °C) und einem flüssigen bzw. tiefschmelzenden Wirkstoff hergestellt werden soll, und/oder, wenn der zweite Wirkstoff (wie z.B. Deltamethrin) zur Erlangung seiner optimalen biologischen Wirkung in gelöster Form zum Wirkort kommen muß.

Unkontrolliertes Auskristallisieren des tiefschmelzenden Wirkstoffs bei der Herstellung des Granulats und nach Warmlagerung kann eine Verringerung der biologischen Wirkung zur Folge haben; Teilchenvergrößerungen und Agglomerationen können zu Sieb- und Düsenverstopfungen führen.

Die EP 0 261 492 beschreibt Pflanzenschutzmittel aus einem oder mehreren Wirkstoffen, auf der Basis wäßrige und organische Phasen enthaltender Suspoemulsionen, die auch beim Auftreten hoher Scherkräfte ein gleichbleibendes Viskositätsverhalten aufweisen.

Es wurde nun überraschenderweise gefunden, daß auch Suspoemulsionen nach dem Wirbelschicht-Verfahren granulierbar sind. Suspoemulsionen sind wäßrige Dispersionen von ausreichend hochschmelzenden Festkörpern, in denen die Lösung eines zweiten Wirkstoffs emulgiert ist.

Voraussetzung für eine erfolgreiche Granulierung der so erwähnten Suspoemulsionen ist die Wahl eines Lösungsmittels für das emulgierbare Konzentrat, das bei dem Granulierprozeß nicht verdunstet.

Die Erfindung betrifft daher wasserdispergierbare Granulate, welche 10 bis 90 Gew.-%, vorzugsweise 40 bis 85 Gew.-% mindestens eines ausreichend hochschmelzenden, in Form einer wäßrigen Dispersion formulierbaren pestiziden Wirkstoffs,

0,1 bis 20 Gew.-%, vorzugsweise 0,5 bis 10 Gew.-% mindestens eines flüssigen, eines tiefschmelzenden und/oder eines in fester Form nicht ausreichend wirksamen pestiziden Wirkstoffs, der in gelöster Form vorliegt und

0,2 bis 20 Gew.-%, vorzugsweise 0,5 bis 10 Gew.-% eines schwerverdunstenden Lösungsmittels oder Lösungsmittelgemisches enthalten.

Bevorzugt sind Granulate, worin der in Form einer wäßrigen Dispersion formulierbare Wirkstoff (Fp. > 65 °C) in, bezogen auf das Gewicht, höherem Mengenanteil und der tiefschmelzende bzw. flüssige oder in festem Zustand nicht ausreichend biologisch aktive Wirkstoff in geringerem Mengenanteil vorliegt.

Die Wirkstoffe werden aus der Reihe der Herbizide, Insektizide, Fungizide, Akarizide, Nematizide, Pheromone und Repellents, vorzugsweise aus der Reihe der Herbizide und Insektizide ausgewählt. Die Granulate enthalten gegebenenfalls mindestens einen Safener.

Als Wirkstoffe, die als Dispersion formulierbar sind und die als Hauptanteil in der Kombinationsformulierung vorliegen, kommen insbesondere Isoproturon und Endosulfan in Frage. Als tiefschmelzende bzw. flüssige oder in festem Zustand nicht ausreichend biologisch aktive Wirkstoffe werden bevorzugt eingesetzt: Fluoroglycofen-ethyl, Trifluralin, Triazaphos und Deltamethrin; besonders bevorzugt sind Fluoroglycofen-ethyl und Deltamethrin.

Nur wenige Lösungsmittel verdunsten nicht oder nur zu einem sehr geringen Anteil bei den hohen Durchsätzen an erwärmtem Gas (Luft- bzw. Stickstoff/Luft-Gemische) während einer Wirbelschicht-Granulierung. Die Lösungsmittel müssen außerdem eine ausreichende Löseeigenschaft für den flüssigen, tiefschmelzenden bzw. in fester Form nicht ausreichend wirksamen pestiziden Wirkstoff aufweisen und für den Einsatz in der Landwirtschaft unbedenklich sein. Lösungsmittel mit einem Siedebereich oberhalb von 170 °C (bei bzw. umgerechnet auf Normaldruck) sind hierfür besonders geeignet.

Es wurde gefunden, daß insbesondere folgende Lösemittel sowohl schwer verdunsten als auch gute Löseeigenschaften aufweisen:
®Solvesso 200 (1), Butyldiglykolacetat, ®Shellsol RA (2), ®Actrel 400 (3), ®Agsolex 8 (4), ®Agsolex 12 (5), ®Norpar 13 (6), ®Norpar 15 (7), ®Isopar V (8), ®Exsol D 100 (9), ®Shellsol K (10) und ®Shellsol R (11), welche sich wie folgt zusammensetzen:

(1) Gemische alkylierter Naphthaline, Siedebereich 219-282°C, Hersteller: Exxon.
(2) Gemische alkylierter Benzole, Siedebereich: 183-312°C, Hersteller: Shell.
(3) Hochsiedendes Aromatengemisch, Siedebereich: 332-355°C, Hersteller: Exxon.

2

(4) N-Octylpyrrolidon, Siedepunk: (0,3 mm Hg) 100°C, Hersteller: GAF.

(5) N-Dodecylpyrrolidon, Siedepunkt (0,3 mm Hg) 145°C, Hersteller: GAF.

(6) Aliphatische Kohlenwasserstoffe, Siedebereich: 228-243°C, Hersteller: Exxon.

(7) Aliphatische Kohlenwasserstoffe, Siedebereich: 252-272°C, Hersteller: Exxon.

(8) Aliphatischer Kohlenwasserstoff, Siedebereich 278-305°C, Hersteller: Exxon.

(9) Aliphatischer Kohlenwasserstoff, Siedebereich 233-263°C, Hersteller: Exxon.

(10) Aliphatischer Kohlenwasserstoff, Siedebereich 192-254°C, Hersteller: Shell.

(11) Aromatischer Kohlenwasserstoff, Siedebereich: 203-267°C, Hersteller: Shell.

Auch Mischungen dieser Lösemittel untereinander sind geeignet. Insbesondere sind Butyldiglykolacetat, ®Actrel 400, ®Agsolex 8 und ®Agsolex 12 gut verwendbar.

Die erfindungsgemäßen Granulate enthalten gegebenenfalls zusätzlich 1 bis 12 Gew.-%, vorzugsweise 4 bis 8 Gew.-% mindestens eines Netzmittels, 2 bis 15 Gew.-%, vorzugsweise 6 bis 12 Gew.-% mindestens eines Dispergiermittels,

0,2 bis 5 Gew.-%, vorzugsweise 0,8 bis 3 Gew.-% mindestens eines Klebers, je nach Wirkstoffgehalt 0,5 bis 60 Gew.-%, vorzugsweise 0,8 bis 20 Gew.-% Inertstoff und

0,5 bis 10 Gew.-%, vorzugsweise 1 bis 5 Gew.-% mindestens eines Emulgators.

Zur Herstellung der wäßrigen Dispersion des hochschmelzenden Wirkstoffs können beispielsweise folgende Netz- und Dispergiermittel eingesetzt werden:

Netzmittel:

sekundäres N-Alkansulfonat (z.B. ®Hostapur SAS, $C_{14}C_{19}$-Olefinsulfonat-Natriumsalz (z.B. ®Hostapur OS), Isodecylsulfobernsteinsäurehalbester-di-Natriumsalz (z.B. ®Netzer IS), Natriumlaurylsuffat (z.B. Texapon K12 oder Texapon Z), dodecylbenzolsulfonsaures Natrium (z.B. Phenylsulfonat HS90), Natriumoleoylmethyltaurid (z.B. ®Hostapon T), Natrium-Dibutylnaphthalinsulfonat (z.B. ®Leonil DB oder ®Geropon NK, ®Nekal BX), Alkyldiglykolethersulfat-Natriumsalz (z.B. ®Genapol LRO), Natriumlauryletherphosphat (z.B. ®Forlanit P), oxethyliertes Polyarylphenolphosphat neutralisiert mit Triethanolamin oder Kaliumhydroxid (z.B. ®Soprophor FL und ®Soprophor FL-K oder HOE S3775, Hoechst AG), ethorylierte Tributylphenole (z.B. ®Sapogenat T080, T110), ethoxylierte Nonylphenole (z.B. ®Arkopal N100), Isotridecanolpolyglykolether (z.B. ®Genapol X-080), Polymerisationsprodukte von Propylenoxid und Ethylenoxid (z.B. ®Genapol PF40), Bis-Mono-phosphorsäureester eines Propylenoxid-Ethylenoxid-Co-blockpolymerisates, neutralisiert mit Kaliumhydroxid (z.B. HOE S3618 K-Salz oder ®Alkaphos MD12-116).

Dispergiermittel:

Ligninsulfonate, wie z.B. ®Vanisperse CB, ®Borresperse CA, ®Ufoxane 3a, ®Ultrazine Na, ®Hansa FE, Na-Salz des sulfonierten Kondensationsproduktes von Formaldehyd mit Methylphenol, wie z.B. ®Rapidamin Reserve C und D; Naphthalinsulfonsäure-Formaldehyd-Kondensationsprodukte, wie z.B. ®Dispersogen A; anionaktives Kondensationsprodukt aus m-Kresol, Nonylphenol, Na-Sulfit und Formaldehyd, wie z.B. HOE S1494 von Hoechst AG; anionaktives Kondensationsprodukt aus Kresol und Formaldehyd, wie z.B. Dispergiermittel SS; Kaliumsalz einer wäßrigen Polycarboxylsäure-Lösung, wie z.B. ®Dispersant DG; Natriumpolycarboxylat, wie z.B. ®Sopropon T36; kondensiertes Natriummethylnaphthalinsulfonat, wie z.B. Supragil MNS90; Natrium- bzw. Kaliumsalz eines Carboxylsäure-Copolymer, kombiniert mit einem anionischen Dispergiermittel, wie z.B. ®Geropon SC211 und ®Geropon SC213;

Zur Verbesserung der Granulat-Festigkeit können folgende Kleber verwandt werden:

Stärkesirup, Dextrose, Methylcellulose, Carboxymethylcellulose (verschiedene ®Tylose-Marken), Polyethylenglykol-Marken, teilhydroxyliertes Polyvinylacetat (verschiedene ®Mowiol-Typen, wie ®Mowiol 3/83), Polyvinylpyrrolidon (wie ®Luviskol K30).

An Inertstoffen können den Granulaten zugesetzt werden:

gefällte Kieselsäuren, pyrogene Kieselsäuren, Kaoline, Aluminiumsilicate, auch calciniertes Aluminiumsilicat, Attapulgit, Montmorillonit, Calcium-Magnesium-Aluminium-Silicate.

Zur Herstellung der emulgierbaren Lösung des flüssigen bzw. tiefschmelzenden oder in festem Zustand nicht ausreichend biologisch aktiven Wirkstoffs können beispielsweise folgende Emulgatoren angewandt werden:

®Dodecylbenzolsulfonsaures Calcium, wie z.B. Phenylsulfonat-Ca; ethoxyliertes Rizinusöl, wie z.B. ®Emulsogen EL und ®Emulsogen El400; ethoxylierte Tributylphenole, wie z.B. ®Sapogenat-T-Marken; ethoxylierte Nonylphenole, wie z.B. ®Arkopal N-Marken; Oleylalkoholpolyglykolether, wie z.B. ®Genapol O-Marken; Isotridecanolpolyglykolether, wie z.B. ®Genapol X-Marken; hochmolekulare Blockpolymerisate aus Propylenoxid und Ethylenoxid, wie z.B. HOE S1816 (Hoechst AG); Tristyrylphenol-Polyglykolether, wie z.B. HOE S3474 (Hoechst AG); Triethanolamin-polyarylphenolpolyglykoletherphosphat, wie z.B. HOE S3475 (Hoechst AG); n-Butanol-Propylenoxid-block-oxalkylat, wie z.B. HOE S3510 (Hoechst AG).

Mischungen aus Stoffen der einzelnen Gruppen können zur Anwendung kommen, aber auch Kombinationen von Stoffen aus den unterschiedlichen Gruppen der Netzmittel, Dispergiermittel und Emulgatoren.

Die Erfindung betrifft weiterhin ein Verfahren zur Herstellung eines wasserdispergierbaren Granulats, das dadurch gekennzeichnet ist, daß man einer wäßrigen Suspoemulsion der Komponenten des Granulats beispielsweise in einem Wirbelschicht-Trockner das Wasser entzieht.

Zur Herstellung der beschriebenen Kombinationsformulierung kann man also von der über 65 °C schmelzenden Hauptkomponente zunächst unter Verwendung geeigneter Netz- und Dispergiermittel eine wäßrige Dispersion zubereiten. In einem zweiten Schritt wird eine emulgierbare Lösung (emulgierbares Konzentrat, Abkürzung: EC) des flüssigen bzw. tiefschmelzenden oder in festem Zustand nicht ausreichend biologisch aktiven Wirkstoffs hergestellt, dessen Emulgatorenzusammensetzung so gewährt wird, daß die Lösung stabil in der Dispersion emulgiert werden kann.

Die Erfindung betrifft auch die Verwendung dieses Granulats zur Herstellung wäßriger Zubereitungen von pestiziden Wirkstoffen.

Die folgenden Herstellbeispiele sollen die Erfindung erläutern.

Allgemeine Angaben zur Beurteilung und Herstellung

Die spontane Dispergierfähigkeit der Granulatformulierung wird nach einer Bewertungsskala von 1 bis 4 beurteilt. Zu diesem Zweck wird zunächst 1 g des Granulats in einen mit standardisiertem Wasser (30°C, 342 ppm $CaCO_3$ Wasserhärte) gefüllten 1 l-Meßzylinder gegeben. Nach 1 Minute wird der Meßzylinder langsam um 180°C gedreht und wieder in die Ausgangslage zurückgebracht. Dieser Vorgang wird dreimal wiederholt. Die Bewertung erfolgt nach folgendem Schema.

Bewertungsskala

1 Alle Granulatkörner sind dispergiert.
Falls nicht dispergierte Granulatkörper vorhanden sind, wird 2 Minuten nach Versuchsbeginn nochmals dreimal wie beschrieben umgeschüttelt und wie folgt bewertet:

2 Das Granulat ist nun vollständig dispergiert.

3 Reste des Granulats sind nicht dispergiert.

4 Das Granulat ist zum überwiegenden Teil nicht dispergiert.

Die Schwebefähigkeit wurde als diejenige Menge des Präparats (Gew.-%) angegeben, die sich nach Ablauf einer Sedimentationszeit von 30 Minuten in den oberen neun Zehntel Volumenteilen einer Suspension befindet (siehe CIPAC-Handbook Vol. 1 (1970), S. 861).

Als Naßsiebrückstand wird die Substanzmenge bezeichnet, die nach 10 Minuten Spülen mit einer definierten Wassermenge auf einem Sieb von 250 µm bzw. 71 µm zurückbleibt. Eine Beschreibung der Methode ist bei "Richtlinien für die amtliche Prüfung von Pflanzenschutzmitteln, Teil III, 2-1/1 (August 1988) der Biologischen Bundesanstalt Braunschweig" gegeben.

Zur Sprühtrocknung kleinerer Mengen wird ein Laborsprühtrockner und zur Wirbelschichtgranulierung von Chargen bis zu etwa 400 g Produkt wurde ein Labor-Wirbelbett verwendet. Ansätze bis zu etwa 15 kg Produkt, wurden auf einem größeren Wirbelbett ausgeführt.

Beispiel 1

Isoproturon + Fluoroglycofen-ethyl - 75 + 2,4 - WG

Zunächst wird eine wäßrige Dispersion des hochschmelzenden Wirkstoffes hergestellt:

| | |
|---|---|
| 308,16 g | Isoproturon, 99,0 %ig |
| 38,64 g | ®Rapidamin Reserve C |
| 17,08 g | ®Forlanit P |
| 4,88 g | ®Alkaphos MD-12-116 |
| 4,76 g | ®Mowiol 3/83 |
| 2,04 g | Entschäumer auf Siliconbasis, z. B. Entschäumer SE2 |
| 4,44 g | ®Perlite J 206 |
| 380,00 g | Trinkwasser |
| 760,00 g | |

Die Komponenten werden gemischt und mit einer Perlmühle gemahlen, bis 50 % der Teilchen eine Korngröße von 2 - 3 µm aufweisen.
Ausbeute: 596 g
Es wird dann die emulgierbare Lösung des tiefschmelzenden Wirkstoffes hergestellt:

| | |
|---|---|
| 7,26 g | Fluoroglycofen-ethyl, 88,5 %ig |
| 7,26 g | ®Agsolex 8 |
| 2,83 g | Hoe S 3510 (Hoechst AG) |
| 0,71 g | Dodecylbenzolsulfonsaures Calcium |
| 18,06 g | |

Die emulgierbare Lösung wird unter Rühren zur wäßrigen Dispersion des Isoproturon gegeben.

Etwa ein Drittel der so hergestellten Suspoemulsion wird sprühgetrocknet; das erhaltene feine Pulver wird im Laborwirbelbettgranulierer vorgelegt und durch Aufsprühen der restlichen Suspoemulsion granuliert.

Man erhält 246,4 g (89 % d. Th.) eines wasserdispergierbaren Granulats mit einer spontanen Dispergierfähigkeit von 1; Schwebefähigkeit = 98 %. Der Naßsiebrückstand beträgt bei einem Sieb von 71 µm : 0,3 %, bei 250 µm : kein Rückstand.

Die prozentuale Zusammensetzung des Granulats ist:

| | |
|---|---|
| 75,76 Gew.-% | Isoproturon, 99,0 %ig |
| 2,26 Gew.-% | Fluoroglycofen-ethyl, 88,5 %ig |
| 9,50 Gew.-% | ®Rapidamin Reserve C |
| 4,20 Gew.-% | ®Forlanit P |
| 1,20 Gew.-% | ®Alkaphos MD-12-116 |
| 1,17 Gew.-% | ®Mowiol 3/83 |
| 0,50 Gew.-% | Entschäumer auf Siliconbasis, z. B. Entschäumer SE2 |
| 1,09 Gew.-% | ®Perlite J 206 |
| 2,26 Gew.-% | ®Agsolex 8 |
| 0,88 Gew.-% | Hoe S 3510 (Hoechst AG) |
| 0,22 Gew.-% | Dodecylbenzolsulfonsaures Calcium |
| 0.96 Gew.-% | Restfeuchte |
| 100,00 Gew.-% | |

Für eine gute biologische Wirksamkeit ist es wichtig, daß das Fluoroglycofen-ethyl in gelöster Form in dem fertigen Granulat vorliegt. Der Gehalt an Lösungsmittel ®Agsolex 8 in dem Isoproturon + Fluoroglycofen-ethyl-WG wurde analytisch nachgewiesen: er beträgt 2,14 Gew.-%. Die Formulierung hat eine gute biologische Wirksamkeit.

Beispiel 2

Wie in dem Herstellbeispiel 1 beschrieben, wird ein Granulat folgender Zusammensetzung hergestellt:

| | |
|---|---|
| 75,76 Gew.-% | Isoproturon, 99,0 %ig |
| 2,26 Gew.-% | Fluoroglycofen-ethyl, 88,5 %ig |

5

| 1,09 Gew.-% | ®Perlite J 206 |
|---|---|
| 9,00 Gew.-% | ®Genamin Reserve C |
| 3,29 Gew.-% | ®Genapol Pf40 |
| 1,20 Gew.-% | Hoe S 3775 (Hoechst AG) |
| 1,17 Gew.-% | ®Luviskol K30 |
| 0,50 Gew.-% | Entschäumer auf Siliconbasis, z. B. Entschäumer SE2 |
| 0,96 Gew.-% | Restfeuchte |
| 3,39 Gew.-% | ®Agsolex 12 |
| 0,28 Gew.% | Dodecylbenzolsulfonsaures Calcium |
| 1,10 Gew.-% | Hoe S 3510 (Hoechst AG) |

Spontane Dispergierfähigkeit:
1
Naßsiebrückstand:
71 µm Sieb = 0,05 %
250 µm Sieb = kein Rückstand
Schwebefähigkeit:
99 %

Die analytische Untersuchung auf Gehalt an ®Agsolex 12 in dem fertigen Granulat ergab 3,4 Gew.-%; die biologische Wirkung ist gut.

Beispiel 3

Wie in dem Herstellbeispiel 1 beschrieben, wird ein Granulat folgender Zusammensetzung hergestellt:

| 60,30 Gew.-% | Isoproturon, 99,0 %ig |
|---|---|
| 1,69 Gew.-% | Fluoroglycofen-ethyl, 88,5 %ig |
| 9,00 Gew.-% | ®Genamin Reserve C |
| 3,30 Gew.-% | ®Genapol Pf40 |
| 1,20 Gew.-% | Hoe S 3775 (Hoechst AG) |
| 1,17 Gew.-% | ®Luviskol K30 |
| 0,50 Gew.-% | Entschäumer auf Siliconbasis, z. B. Entschäumer SE2 |
| 18,30 Gew.-% | Kaolin 1777 |
| 0,50 Gew.-% | Restfeuchte |
| 0,47 Gew.-% | ®Emulsogen EL 400 |
| 0,10 Gew.-% | Dodecylbenzolsulfonsaures Calcium |
| 0,93 Gew.-% | ®Sapogenat T 180 |
| 2,54 Gew.-% | ®Actrel 400 |

Spontane Dispergierfähigkeit:
1 - 2
Naßsiebrückstand:
71 µm Sieb = 0,05 %
250 µm Sieb = kein Rückstand
Schwebefähigkeit:
98 %

Das fertige Granulat enthält 2,5 Gew.-% ®Actrel 400, die biologische Wirkung ist gut.

Beispiel 4

Herstellung eines Isoproturon + Fluoroglycofen-ethyl-Granulats ohne Verwendung eines Lösemittels für Fluoroglycofen-ethyl.

| 3409,2 g | Isoproturon, 99,0 %ig |
|---|---|
| 101,7 g | Fluoroglycofen-ethyl, 88,5 %ig |
| 427,5 g | ®Genamin Reserve C |
| 189,0 g | ®Genapol Pf 40 |

| | |
|---|---|
| 54,0 g | Hoe S 3775 (Hoechst AG) |
| 52,7 g | ®Luviskol K30 |
| 22,5 g | Entschäumer SE2 (eingesetzt werden 93,7 g 24 %ige wäßrige Dispersion) |
| 200,2 g | ®Wessalon S |
| 4456,8 g | Wasser |
| 8913,6 g | |

Die Komponenten werden nach geeigneter Vorzerkleinerung gemischt und mit einer Perlmühle gemahlen, bis 50 % der Teilchen eine Korngröße von 2 - 3 µm aufweisen.

Aus dieser wäßrigen Dispersion wird, so wie bei Beispiel 1 beschrieben, ein Granulat folgender Zusammensetzung hergestellt.

| | |
|---|---|
| 75,76 Gew.-% | Isoproturon, 99,0 %ig |
| 2,26 Gew.-% | Fluoroglycofen-ethyl, 88,5 %ig |
| 9,50 Gew.-% | ®Rapidamin Reserve C |
| 4,20 Gew.-% | ®Genapol Pf 40 |
| 1,20 Gew.-% | Hoe S 3775 (Hoechst AG) |
| 1,17 Gew.-% | ®Luviskol K30 |
| 0,50 Gew.-% | Entschäumer SE2 |
| 4,45 Gew.-% | ®Wessalon S |
| 0,96 Gew.-% | Restfeuchte |
| 100,00 Gew.-% | |

Spontane Dispergierfähigkeit:

1

Naßsiebrückstand:

71 µm Sieb = Spur

250 µm Sieb = 0,1 %

Schwebefähigkeit:

99 %

| Biologische Wirkung der in den Beispielen 1 bis 4 hergestellten Produkte | | | | | | | | |
|---|---|---|---|---|---|---|---|---|
| Isoproturon + Fluoroglycofen-ethyl g/ai/ha | | Wirksamkeit in % | | | | | | |
| | | STEME | GALAP | VERHE | VIOAR | LAMAM | TRZAS | HORV5 |
| Bsp.1 | 300 + 7,5 | 100 | 88 | 68 | 78 | 65 | 0 | 3 |
| | 600 + 15 | 100 | 92 | 85 | 94 | 83 | 0 | 7 |
| Bsp.2 | 300 + 7,5 | 100 | 78 | 80 | 90 | 70 | 0 | 4 |
| | 600 + 15 | 100 | 92 | 88 | 96 | 83 | 0 | 6 |
| Bsp.3 | 300 + 7,5 | 99 | 83 | 88 | 88 | 93 | 0 | 4 |
| | 600 + 15 | 100 | 89 | 94 | 94 | 95 | 0 | 6 |
| Bsp.4 | 300 + 7,5 | 75 | 15 | 54 | 54 | 14 | 0 | 2 |
| | 600 + 15 | 86 | 32 | 69 | 65 | 30 | 0 | 5 |
| Legende: STEME = Stellaria media<br>GALAP = Galium aparine<br>VERHE = Veronica heterifolia<br>VIOAR = Viola arvensis<br>LAMAM = Lamium amplexicaule<br>TRZAS = Sommerweizen<br>HORVS = Sommergerste | | | | | | | | |

7

Die Testpflanzen wurden in Töpfen angezogen und im Stadium 25-31 (Dikotyle) und im Stadium 21-25 (Monokotyle) mit den Prüfprodukten, die in 300 l Wasser je ha aufgelöst wurden, behandelt. Die Bonitur wurde nach 3 Wochen vorgenommenen.

Aus diesen Beispielen geht hervor, daß eine deutlich schlechtere biologische Wirkung erreicht wird, wenn Fluoroglycofen nicht in gelöster Form vorliegt (Beispiel 4).

**Patentansprüche**

1. Wasserdispergierbares Granulat, enthaltend
   als Hauptkomponente 10 bis 90 Gew.-% mindestens eines ausreichend hochschmelzenden, in Form einer wäßrigen Dispersion formulierbaren pestiziden Wirkstoffs mit einem Fp. > 65°C,
   0,1 bis 20 Gew.-% mindestens eines flüssigen, eines tiefschmelzenden und/oder eines in festem Zustand nicht ausreichend biologisch aktiven pestiziden Wirkstoffs, der in gelöster Form vorliegt und
   0,2 bis 20 Gew.-% eines schwerverdunstenden Lösungsmittels oder Lösungsmittelgemisches, mit einem Siedebereich oberhalb von 170 °C.

2. Granulat gemäß Anspruch 1, zusätzlich enthaltend
   1 bis 12 Gew.-% mindestens eines Netzmittels,
   2 bis 15 Gew.-% mindestens eines Dispergiermittels,
   0,2 bis 5 Gew.-% mindestens eines Klebers,
   0,5 bis 80 Gew.-% Inertstoff und
   0,5 bis 10 Gew.-% mindestens eines Emulgators.

3. Granulat gemäß Anspruch 1 oder 2, welches mindestens einen Wirkstoff aus der Reihe der Herbizide, Insektizide, Fungizide, Akarizide, Nematizide, Pheromone und Repellents und gegebenenfalls mindestens einen Safener enthält.

4. Granulat gemäß einem der Ansprüche 1 bis 3, enthaltend Isoproturon als Hauptkomponente und Fluoroglycofenethyl als gelösten Wirkstoff.

5. Verfahren zur Herstellung eines Granulats gemäß einem der Ansprüche 1 bis 4, dadurch gekennzeichnet, daß man einer wäßrige Suspoemulsion der Komponenten des Granulats beispielsweise in einem Wirbelschicht-Trockner das Wasser entzieht.

6. Verwendung eines Granulats gemäß einem der Ansprüche 1 bis 4 zur Herstellung wäßriger Zubereitungen von pestiziden Wirkstoffen.

7. Verwendung einer Zubereitung gemäß einem der Ansprüche 1 bis 4 in Form einer wäßrigen Zubereitung zur Bekämpfung unerwünschten Pflanzenwuchs.

8. Verfahren zur Bekämpfung von unerwünschtem Pflanzenwuchs, dadurch gekennzeichnet, daß man eine Zubereitung gemäß einem der Ansprüche 1 bis 4 in Form einer wäßrigen Zubereitung auf Pflanzen, Pflanzensamen oder die Anbaufläche appliziert.

**Claims**

1. Water-dispersible granules containing
   as the main component 10 to 90% by weight of at least one pesticidal active substance which has a sufficiently high melting point, can be formulated in the form of an aqueous dispersion, and has an m.p. > 65°C,
   0.1 to 20% by weight of at least one liquid pesticidal active substance or pesticidal active substance of low melting point and/or pesticidal active substance which is not sufficiently biologically active in the solid state, in dissolved form, and
   0.2 to 20% by weight of a solvent or solvent mixture with low volatility, having a boiling range above 170°C.

2. Granules as claimed in claim 1, additionally containing
   1 to 12% by weight of at least one wetting agent,
   2 to 15% by weight of at least one dispersant,
   0.2 to 5% by weight of at least one adhesive,

0.5 to 80% by weight of inert substance and
0.5 to 10% by weight of at least one emulsifier.

3. Granules as claimed in claim 1 or 2, which contain at least one active substance from the series consisting of herbicides, insecticides, fungicides, acaricides, nematicides, pheromones and repellants and, if appropriate, at least one safener.

4. Granules as claimed in one of claims 1 to 3, containing isoproturon as the main component and fluoroglycofen-ethyl as dissolved active substance.

5. A process for the preparation of granules as claimed in one of claims 1 to 4, which comprises removing the water from an aqueous suspoemulsion of the granule components, for example in a fluidized-bed drier.

6. The use of granules as claimed in one of claims 1 to 4 for preparing aqueous preparations of pesticidal active substances.

7. The use of a preparation as claimed in one of claims 1 to 4 in the form of an aqueous preparation for controlling undesired plant growth.

8. A method for controlling undesired plant growth, which comprises applying a preparation as claimed in one of claims 1 to 4 in the form of an aqueous preparation to plants, seeds of plants or the area under cultivation.

**Revendications**

1. Granulé dispersable dans l'eau, contenant
comme constituant principal, 10 à 90 % en masse d'au moins une substance pesticide de point de fusion suffisamment élevé, formulable sous forme d'une dispersion aqueuse, et ayant un point de fusion > 65°C,
0,1 à 20 % en masse d'au moins une substance pesticide liquide, une substance pesticide de bas point de fusion et/ou une substance pesticide ayant une activité biologique insuffisante sous forme solide, qui se trouve sous une forme dissoute, et 0,2 à 20 % en masse d'un solvant ou d'un mélange de solvants non volatil ayant un domaine d'ébullition supérieur à 170°C.

2. Granulé selon la revendication 1, contenant en outre
1 à 12 % en masse d'au moins un agent mouillant,
2 à 15 % en masse d'au moins un agent dispersant,
0,2 à 5 % en masse d'au moins un agent adhésif,
0,5 à 80 % en masse d'un produit inerte et
0,5 à 10 % en masse d'au moins un émulsionnant.

3. Granulé selon la revendication 1 ou 2, qui contient au moins une substance active de la série des herbicides, des insecticides, des fongicides, des acaricides, des nématicides, des phéromones et des produits à effet répulsif, et éventuellement au moins un safener.

4. Granulé selon l'une des revendications 1 à 3, contenant de l'isoproturon comme constituant principal et du fluoroglycofen-éthyle comme substance active dissoute.

5. Procédé de préparation d'un granulé selon l'une des revendications 1 à 4, caractérisé en ce que l'on élimine l'eau d'une suspoémulsion aqueuse des constituants du granulé, par exemple dans un sécheur à lit fluidisé.

6. Utilisation d'un granulé selon l'une des revendications 1 à 4 pour la préparation de compositions aqueuses de substances pesticides.

7. Utilisation d'une composition selon l'une des revendications 1 à 4 sous forme d'une composition aqueuse pour la lutte contre la végétation non désirée.

8. Procédé de lutte contre la végétation non désirée, caractérisé en ce que l'on applique sur les végétaux, sur les graines des végétaux ou sur la surface cultivée une composition selon l'une des revendications 1 à 4 sous forme d'une composition aqueuse.